# EUROPEAN PATENT APPLICATION

(11) **EP 2 567 774 A1**
(43) Date of publication of application: **13.03.2013**
(21) Application number: 12182827.1
(22) Date of filing: 03.09.2012
(51) Int. Cl.: B23K 26/26, B23K 26/28, B23K 28/02, B23K 26/14

(54) **Hybrid laser arc welding system and method**

(30) Priority: 07.09.2011 US 201113227043
(71) Applicant: General Electric Company, Schenectady, NY 12345 (US)
(72) Inventor: Lin, Dechao, Greenville, SC South Carolina 29615 (US); Cui, Yan, Greenville, SC South Carolina 29615 (US); Kottilingam, Srikanth Chandrudu, Greenville, SC South Carolina 29615 (US)
(74) Representative: Cleary, Fidelma

(57) **Abstract**

A welding system (100) comprises pieces positioned to form a gap (140), a filler (150) positioned in the gap (140), an arc welder (160) positioned and configured to follow the gap (140) and transfer melted material to the vicinity of the gap (140) to create an initial weld pool (133), and a laser welder (130) positioned and configured to project a beam through the initial weld pool (133) adjacent to the gap (140) to melt a portion of the filler (150), creating an enhanced weld pool (134) and helping it to fill the gap (140). A welding method comprises fixing pieces (110) to define a gap (140), positioning a filler in the gap (140), applying an electrical arc to at least one of the pieces (110) so as to transfer melted material to the vicinity of the gap (140) and thereby create an initial weld pool (133), and projecting a laser beam through the initial weld pool (133) adjacent to the gap (140) to melt a portion of the filler (150).

## Description

### BACKGROUND OF THE INVENTION

The subject matter disclosed herein relates generally to welding processes and more specifically systems and methods for welding using hybrid welding techniques.

In today's world, a number of welding techniques are known for joining two or more pieces of metal. Typically, one or more welding techniques are used to apply energy so as to create a weld pool comprising molten weld material that traverses a joint or seam between the pieces that are to be joined. As the molten material solidifies, a weld is created joining the pieces. Common techniques for applying energy to create the weld pool use laser welders or electrical arc welders. For example, in laser welding, a laser beam is applied to the pieces to melt a portion pieces, thereby creating a weld pool. In arc welding, an electrical arc is established between the pieces and an electrode. In gas metal arc welding (GMAW), the arc melts the consumable electrode and carries the melted material to help form the weld pool. In hybrid welding, a combination of two or more welding techniques, such as laser welding and gas metal arc welding, are used.

As the thickness of the pieces to be joined increases, the quantity of material that must be melted so as to form a suitable weld pool for a full-depth weld (and the amount of energy required to create that weld pool) also increases. Similarly, as the melting temperature and/or the specific heat of materials increases, the rate at which energy must be applied so as to create the weld pool also increases. Further still, as thermal conductivity of the weld material decreases, formation of deep welds becomes more difficult. For these reasons, where the pieces to be joined are relatively thick or comprise materials having relatively low thermal conductivity or relatively high melting temperatures and/or specific heats, the use of traditional welding techniques has required either an increase in the rate at which energy is applied (i.e., upgrades to welding equipment) or a decrease in the rate at which the weld can be formed.

At the same time, those skilled in the art seek development of materials having increased melting temperatures and techniques for increasing the speeds at which those materials can be welded. For example, in the gas turbine industry, a number of alloys exhibiting relatively high temperature melting points have been, and continue to be, developed. These include alloys used for turbine blades such as U500, RENE 77, U700, IN738, and GTD111; alloys used for turbine vane assemblies such as X40, X45, FSX414, N155, and GTD-222; alloys used for combustors such as SS309, HAST X, N-263, and HA-188; alloys used for turbine wheels such as ALLOY 718, ALLOY 706, Cr-Mo-V, A286, and M152; and alloys used for gas compressor blades such as AISI 403, AISI 403 + Cb, and GTD-450.

Attempts to join pieces comprising alloys having relatively high temperature melting points such as the above-cited materials, wherein the thickness of the pieces to be joined is at least approximately 0.2 inches or at a common thickness of 0.25 inches, at commercially acceptable speeds (such as at least approximately twenty inches per minute or at a more preferred rate of sixty inches per minute or even at rates as high as one hundred inches per minute) have presented significant challenges. More precisely, while experience has shown that arc welding techniques can generate a relatively large weld pool, the relatively low power density (e.g., approximately 104 watts per square centimeter) of typical arcs is generally insufficient to enable the molten material to penetrate to sufficient depths within the pieces at moderate to high welding speeds (i.e., at least about thirty to seventy inches per minute). As a result, where the pieces are relatively thick (e.g., at least approximately 0.25 inches thick) or comprise materials having relatively high melting points (e.g., at least approximately 2600 degrees F), relatively slow welding speeds (e.g., at or below approximately twenty inches per second) have been found to be required in order to facilitate acceptable penetration of the weld into or through the pieces. Attempts to employ faster weld speeds have resulted in humping or lack of fusion of the weld bead.

Attempts to use lasers to solve these problems have achieved only limited success. For example, while lasers have been able to achieve increased weld penetration at moderate to high speeds due to their relatively high power density (e.g., greater than 106 watts per square centimeter), the relatively narrow width (i.e., approximately only 0.6 mm in diameter) of typical laser beams detracts from the practicability of their use. Since the laser beam size is relatively narrow, lack of fusion often occurs when the laser beam fails to precisely track the seam or where the gap between the pieces is too wide. Moreover, since required laser power generally increases with material thickness and/or melting temperature, the cost of laser welding adapted for welding relatively thick materials or for materials that have relatively high melting points and/or specific heats or that exhibit relatively low thermal conductivity can be an issue. As a result, while relatively high welding speeds (e.g., greater than 60 inches per minute) and improved penetration depths have been achieved with lasers in limited cases, automated laser welding processes have failed to provide adequate reliability at elevated speeds for thicker pieces comprising high temperature alloys. Attempts to improve reliability using seam tracking controls have added cost, but have failed to reliably improve weld quality and to eliminate blowholes or fusion gaps.

As a result, those skilled in the art seek improved systems and methods for welding thick pieces using hybrid welding techniques at reduced laser power levels and moderate speeds. More specifically, an improved system and method is sought for forming fully-penetrated welds on relatively thick pieces using relatively low-powered lasers at relatively high speeds.

### BRIEF DESCRIPTION OF THE INVENTION

According to one aspect of the invention, a welding system comprises two or more pieces positioned to form a gap between the pieces, a filler positioned in the gap at a desired depth, an arc welder, and a laser welder. The arc welder is positioned and configured to follow the gap and to transfer melted material to the vicinity of the gap so as to create an initial weld pool of a desired width. The laser welder is positioned and configured to project a laser beam through the initial weld pool adjacent to the gap so as to melt at least a portion of the filler, thereby creating an enhanced weld pool and helping the enhanced weld pool to fill the gap.

According to another aspect of the invention, a welding method comprises fixing two or more pieces so as to define a gap between the pieces, positioning a filler in the gap at a desired position, applying an electrical arc to at least one of the pieces so as to transfer melted material to the vicinity of the gap and thereby create an initial weld pool of a desired width, and projecting a laser beam through the initial weld pool adjacent to the gap so as to melt at least a portion of the filler, thereby creating an enhanced weld pool and helping the enhanced weld pool to fill the gap.

As a result, the invention provides a stable welding system and method enabling thick pieces to be welded with improved speed and reliability. These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is an orthographic drawing depicting an exemplary welding system using a hybrid welding technique,
FIG 2 is a flow chart showing an exemplary process for welding pieces of thick and/or high temperature material using a hybrid welding technique,
FIG. 3 is a drawing depicting an exemplary welding system using a hybrid welding technique,
FIG. 4 is a drawing depicting an exemplary pair of pieces configured and positioned to be welded using a hybrid welding technique, and
FIG. 5 is a drawing depicting an exemplary pair of pieces configured and positioned to be welded using a hybrid welding technique.

The detailed description explains embodiments of the invention, together with advantages and features, by way of example with reference to the drawings.

### DETAILED DESCRIPTION OF THE INVENTION

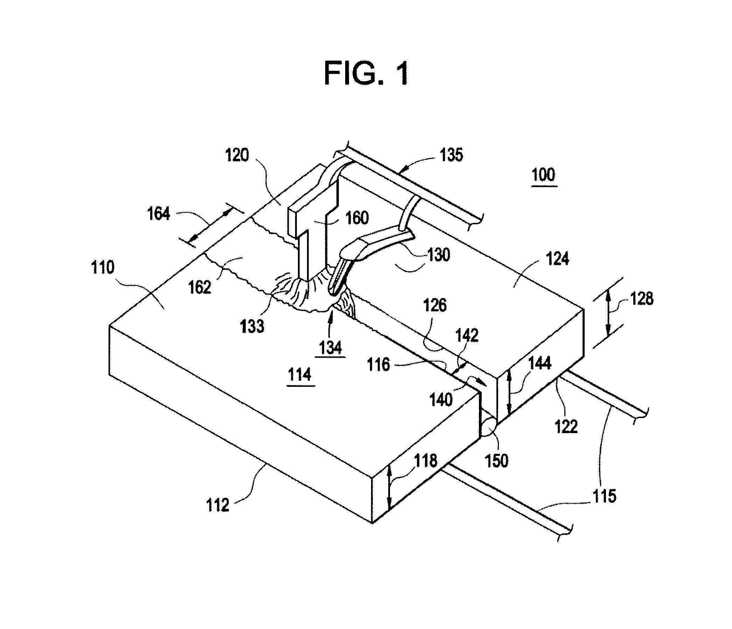

Referring now to the drawings, in which like numerals refer to like elements throughout the several views, FIG. 1 shows an exemplary welding system using a combination of welding techniques. As shown in FIG. 1, a welding system 100 for joining two or more pieces 110, 120 includes an arc welder 160 that is positioned and configured to follow a gap 140 and to transfer material to the vicinity of the gap 140 so as to create an initial weld pool 133 of a desired width in the vicinity of a gap 140. To accomplish this, arc welder 160 is positioned so as to follow the gap 140 as an electrical arc from arc welder 160 transfers material to the vicinity of the gap 140. In an exemplary embodiment, arc welder 160 forms initial weld pool 133 by transferring weld material from a consumable electrode. The initial weld pool 133 traverses the gap and rests upon the two or more pieces 110, 120.

A laser welder 130 is positioned and configured to project a laser beam onto the initial weld pool 133 adjacent to the gap 140 so as to penetrate through the initial weld pool 133 and the gap 140 and impinge upon a filler 150 that is positioned in or adjacent to the gap 140. As the laser beam impinges upon the filler 150, energy is imparted to the filler 150, thereby melting some or all of the filler 150. In addition, the action of the laser beam upon the initial weld pool 133 adds energy to the material of the initial weld pool 133, helping at least a portion of the initial weld pool 133 to flow into the gap 140 and to join with the melted material from the filler 150 so as to create an enhanced weld pool 134. In an exemplary embodiment, the enhanced weld pool 134 fills the gap 140 between edges 116 and 126 to the depth of the filler 150 as it is positioned in (or adjacent to) the gap 140.

In an exemplary embodiment, pieces 110, 120 comprise stainless steel plates that are approximately 0.25 inches thick. Laser welder 130 produces a beam of approximately 4-kW of power and is carried by welder conveyance 135, which may be a robotic arm or a track assembly, and which is configured to guide laser welder 130 along gap 140 at a welding speed of approximately sixty inches per minute. Alternatively, pieces 110, 120 may be carried by work-piece conveyance 115, which is configured to transport pieces 110, 120 relative to laser welder 130 at a welding speed of approximately sixty inches per minute. In an exemplary embodiment, laser welder 130 is configured so as to provide a laser beam carrying sufficient power to penetrate through the filler 150 and to melt a desired portion of the filler 150 (e.g., the entire filler, half of the filler) so that an enhanced weld pool 134 is created comprising material deposited in the initial weld pool 133, material melted from each of the pieces 110 and 120, and material from the filler 150. Solidification of the enhanced weld pool 134 completes the full depth weld. As one skilled in the art will appreciate, the invention enables use of a laser having lower power relative to the power that would be required to penetrate through the pieces 110 and 120 if they were positioned so as leave no gap.

According to the invention, a width 142 of gap 140 depends upon, and is inversely related to, a depth 144 of the finished weld. In one embodiment, it has been observed that a smaller gap is needed for thicker materials. In other embodiments, a relationship between weld depth 144 and width 142 of gap 140 can be approximated theoretically or from empirical data developed through experience with the composition and physical dimensions of the pieces and the characteristics of the laser welder or through other methods known in the art. In an exemplary embodiment, thickness 128 is 0.25 inches, and width 142 of rectangular gap 140 is 0.035 inches. In an exemplary embodiment, gap 140 is Y-shaped when viewed from an end of the gap such that the open part of the Y corresponds to the part of the gap closest to the welder, and the closed part of the Y is farthest from the welder and provides a barrier to support enhanced weld pool 134 as it fills gap 140. In another exemplary embodiment, gap 140 is U-shaped. In another exemplary embodiment, gap 140 is J-shaped.

As shown in FIG. 1, filler 150 has been placed into rectangular gap 140 adjacent to back surfaces 112, 122. In this position, filler 150 provides support for enhanced weld pool 134 (which is created by the combined action of arc welder 160 and laser welder 130 and assisted in filling gap 140 through the action of laser welder 130) and provides that depth 144 will approximate the full thickness 118, 128 of pieces 110, 120, thereby forming a full-depth weld. In an exemplary embodiment of the invention, filler 150 comprises a wire that is sized so as to fill gap 140 and/or seal gap 140 so as to retain a weld pool therein. Since filler 150 is to be at least partially (and sometimes fully) melted by the energy of arc welder 160 and laser welder 130 (e.g., through direct impingement of the laser beam or through transfer of heat carried by the flowing portion of enhanced weld pool 134), width 142 of gap 140 also depends upon the power capacity of laser welder 130. In an exemplary embodiment, filler 150 comprises an additive material packed into gap 140, positioned and configured to provide a supporting structure for enhanced weld pool 134. It should be appreciated that filler may be placed adjacent to the gap at a surface of the pieces 110, 120 in any configuration suitable for retaining a weld pool in the gap. For example, a filler may be placed against adjacent surfaces of the pieces so as to traverse the gap, thereby providing a supporting structure for retaining a weld pool in the gap.

Filler 150 may be held in place within or adjacent to gap 140 using tack welds, compression, or another suitable means. For example, filler 150 may be held in place by compression between pieces 110, 120. Alternatively, filler 150 may be retained between opposing channels formed or machined into edges 116 and 126. In an alternative embodiment, filler 150 may comprise one or more thin platforms formed in and cantilevered from edge 116 and/or edge 126 so as to form a supporting structure for enhanced weld pool 134 when pieces 110, 120 are positioned adjacent one another. As one skilled in the art will appreciate, filler 150 may be formed with a rectangular cross-section or a round cross-section or any other suitable section traversing gap 140 so as to support enhanced weld pool 134 as it flows into and fills gap 140. Still further, filler 150 may be positioned against and tacked to back surfaces 112, 122 of pieces 110, 120 so as to traverse gap 140.

For a full-depth weld, filler 150 is positioned adjacent back surface 112 or 122. For welds of lesser depth, filler 150 may be positioned at an intermediate depth such as midway between back surfaces 112, 122 and front surfaces 114, 124. It should be noted that after a weld is completed from front surfaces 114, 124 to the position at which filler 150 is situated, pieces 110, 120 may be rotated so that a complementary weld can be formed between back surfaces 112, 122 and filler 150. In this way, a full-depth weld can ultimately be formed in extremely thick (e.g., 1/2 inch thick) material at relatively high welding speeds (e.g., at up to approximately sixty inches per minute).

Upon use of laser welder 130, the energy of at least a portion of enhanced weld pool 134 is increased by impingement of laser energy from laser welder 130 and thereby caused to flow into contact with filler 150 which has been melted by action of laser welder 130 as its beam has penetrated through the initial weld pool 133 and the gap 140 and impinged upon filler 150. In an exemplary embodiment, width of the beam from laser welder 130 is slightly less than width of gap 140 such that energy from laser welder 130 is applied directly to filler 150 after penetrating through the initial weld pool 133. Within gap 140, energy from laser welder 130 melts some or all of filler 150 and at least a portion of pieces 110 and 120 adjacent to edges 116 and 126 to create the enhanced weld pool 134. Upon solidification of the enhanced weld pool 134, a weld that penetrates to filler 150, is formed. In this exemplary embodiment, the resulting weld is full-depth, extending to back surfaces 112, 122.

Thus, in an exemplary embodiment, a hybrid welder comprising arc welder 160 and laser welder 130 enables formation of a weld bead 162 from the solidified enhanced weld pool 134. This weld bead 162 completely fills gap 140 and provides a full-depth weld between pieces 110 and 120. In an exemplary embodiment, full-depth weld extends from back surfaces 112, 122 to front surfaces 114, 124. In addition, a width of weld bead 162 is greater than width of gap 140. Accordingly, laser welder 130 provides the desired weld depth 144 while the combined action of arc welder 160 and laser welder 130 satisfies the requirements for adequate width 164 of weld bead 162.

In an exemplary embodiment, the enhanced weld pool 134 created by the arc welder 160 and enhanced by the action of the laser welder 130 is carried, by the action of laser welder 130, into the gap 140 to the position (depth) of filler 150 in gap 140. In accordance with this embodiment, laser welder 130 is positioned so that its beam contacts the initial weld pool 133 created by arc welder 160 at or near the leading edge of initial weld pool 133 near the gap 140.

As one skilled in the art will appreciate, system 100 can be used with pieces 110, 120 of any shape that facilitates formation of a gap between the pieces so as to enabling penetration of a laser beam to a desired depth and that facilitates flow of initial weld pool 133 into gap 140 so as to join with material from filler 150, thereby creating an enhanced weld pool filling gap 140. Thus, pieces 110, 120 may be flat plates or curved sections or even cylindrical members such as pipes. Where it is desirable to use gravity to help cause enhanced weld pool 134 to form in gap 140, laser welder 130 and arc welder 160 may be positioned above a portion of gap 140 where the adjacent front surfaces 114, 124 are positioned above back surfaces 112, 122. Where pieces 110, 120 are substantially flat plates, most or all of gap 140 may be oriented vertically, and laser welder 130 and arc welder 160 may be positioned above front surfaces 114, 124 and gap 140 and may move along gap 140. Where pieces 110, 120 have circular cross sections, such as in the case where pieces 110, 120 are pipe sections, laser welder 130 and arc welder 160 may be substantially fixed in positions above an uppermost portion of the gap between pipe sections. In accordance with this embodiment, the pipe sections may be rotated about their central axis so as to expose the circumferential gap to laser welder 130 and arc welder 160.

In accordance with the invention, formation of enhanced weld pool 134 is assisted by impingement of laser welder 130 onto the initial weld pool 133. Nonetheless, enhanced weld pool 134 is a high-temperature, molten pool of material, formed in gap 140 where it is supported by melted filler 150, which prevents the molten pool from blowing away or dropping.

In an exemplary embodiment, pieces 110, 120 comprise one or more materials suitable for use in a turbine blade of a gas turbine engine such as U500, RENE 77, U700, IN738, and GTD111. In another exemplary embodiment, pieces 110, 120 comprise one or more materials suitable for use in a vane assembly of a gas turbine engine such as X40, X45, FSX414, N155, and GTD-222. In still another exemplary embodiment, pieces 110, 120 comprise one or more materials suitable for use in a combustor of a gas turbine engine such as SS309, HAST X, N-263, and HA-188. In still another exemplary embodiment, pieces 110, 120 comprise one or more materials suitable for use in a turbine wheel of a gas turbine engine such as ALLOY 718, ALLOY 706, Cr-Mo-V, A286, and M152. In yet another exemplary embodiment, pieces 110, 120 comprise one or more materials suitable for use in a compressor blade of a gas turbine engine such as AISI 403, AISI 403 + Cb, and GTD-450.

As one skilled in the art will appreciate, pieces 110, 120 may comprise materials formulated from various constituents including molybdenum, nickel, tungsten, rhenium, iron, aluminum, carbon, copper, chromium, titanium and other constituents so as to provide desirable properties for a particular application. Exemplary materials may exhibit a melting temperature of between 1000 degrees F to up to approximately 6000 degrees F. For example, a material may be formulated to exhibit a melting temperature of at least 2000 degrees F, or at least 2100 degrees F, or at least 2200 degrees F, or at least 2300 degrees F, or at least 2400 degrees F, or at least 2500 degrees F, or at least 2600 degrees F, or at least 2700 degrees F, or at least 2800 degrees F, or at least 2900 degrees F, or at least 3000 degrees F, or at least 3100 degrees F, and so on up to approximately 6000 degrees F. Pure rhenium may exhibit a melting temperature of at least 5700 degrees F.

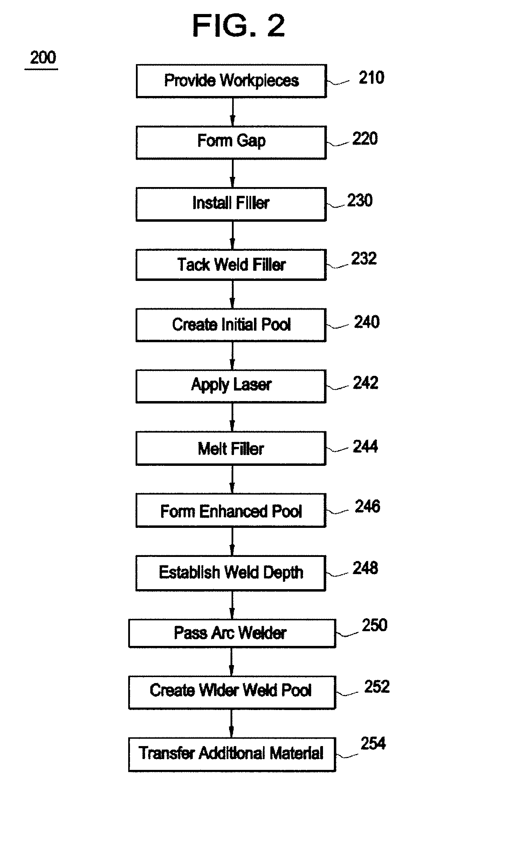

FIG 2 is a flow chart showing an exemplary welding method 200 for joining pieces that are relatively thick or that have relatively high melting temperatures. In an exemplary embodiment, pieces to be welded are provided 210 on a conveyance fixture so as to form a gap between the pieces. The width of the gap is fixed or varied 220 according to a predefined relationship depending upon the thickness of the pieces and the power of the laser welder. This relationship may be determined from empirical data developed through experience with the composition and physical dimensions of the pieces and the characteristics of the laser welder or through other methods known in the art. A filler, such as a wire or other structure suitable for at least partially sealing the gap so as to retain melted weld material within the gap, is installed 230 between or against the two pieces to be welded so as to plug the gap and to serve as a supporting structure for the weld pool that is created by operation of the laser welder. In an exemplary embodiment, the wire is tack welded 232 into place between the pieces.

Next, an arc welder establishes an electrical arc with at least one of the pieces in the vicinity of the gap so as to transfer melted material to the vicinity of the gap and thereby create an initial weld pool of a desired width 240. The beam from the laser welder is also applied 242 to the initial weld pool created by the arc welder. The beam from the laser welder penetrates through the initial weld pool and through the gap to the filler, melting at least a portion of the filler 244 and helping causing, enabling, or assisting material from the initial weld pool to flow into the gap and combine with the melted filler material to create an enhanced weld pool 246 at least partially filling the gap and establishing 248 an acceptable weld depth. Thus, a weld bead of sufficient width is formed so as to completely fill the gap and completes a full-depth and full-width weld.

In an exemplary embodiment, the power level of the laser welder is set or other wise controlled so that sufficient energy is delivered to carry melted material from the enhanced weld pool into the gap so as to fill the gap to the depth of the filler while also melting the filler so as to create the enhanced weld pool. During the application of the laser, the gap is initially at least partially empty, resulting in a decreased requirement for laser power relative to that which would be required to penetrate to the full depth of the pieces in the absence of a gap.

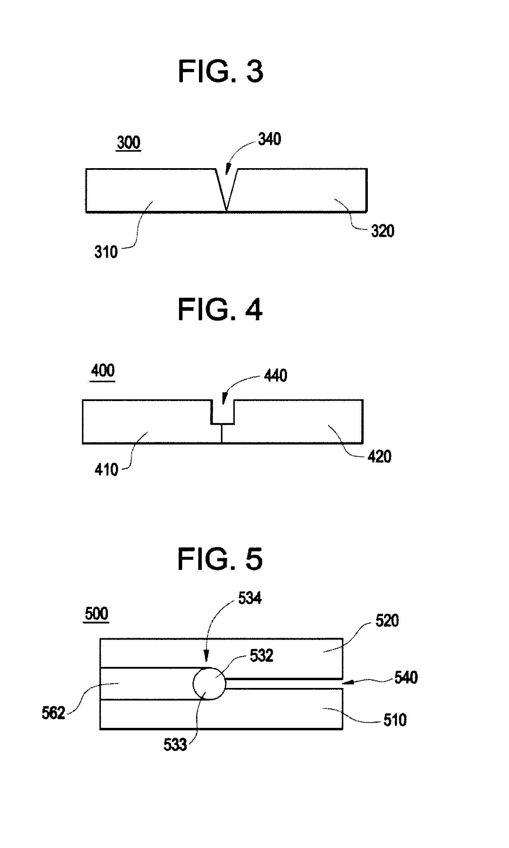

As shown in FIG. 3, in an exemplary welding system 300 for a hybrid welding technique, pieces 310 and 320 are positioned so as to for a V-shaped gap 340 between the pieces. At the gap 340, pieces 310 and 320 are formed and/or machined so as to provide a narrowing of the gap 340 with increasing depth into the gap 340. As a result, the pieces 310 and 320 may contact, or be situated very close to one another adjacent to one surface of the pieces while defining a relatively wider opening to the gap adjacent to the opposing surfaces of the pieces. As a result, an arc welder may be used to deposit a weld pool on the surfaces adjacent to the opening in gap 340, and a laser can be applied to that deposited material to facilitate its flowing into the gap so as to fill the gap. Being configured to form a gap that is open adjacent to one surface and substantially closed on an opposing surface, the configured pieces facilitate use of a hybrid welding technique that can provide a full depth weld while also reducing the need for a filler to seal the gap. In an exemplary embodiment, thickness 330 depends upon the available laser power. Where a laser capable of providing 4 kW is available, a material thickness of one eighth of an inch provides full depth welds using the disclosed process. Where it is desired to weld thicker pieces, greater laser power may be required.

As shown in FIG. 4, in an exemplary welding system 400 for a hybrid welding technique, pieces 410 and 420 are positioned so as to for a rectangularly-shaped gap 440 between the pieces. At the gap 440, pieces 410 and 420 are formed and/or machined so as to provide a seal for the gap 440 at its extreme depth into the gap 440 while also defining an opening to the gap. As a result, an arc welder may be used to deposit a weld pool on the surfaces adjacent to the opening in gap 440, and a laser can be applied to that deposited material to facilitate its flowing into the gap so as to fill the gap 440. Being configured to form a gap that is open adjacent to one surface and substantially closed on an opposing surface, the configured pieces facilitate use of a hybrid welding technique that can provide a full depth weld while also reducing the need for a filler to seal the gap.

As shown in FIG. 5, in an exemplary welding system 500 for a hybrid welding technique, a pieces 510 and 520 are positioned so as to for a gap 540 between them. An arc welder (not shown) transfers material to the vicinity of the gap 540 so as to create an initial weld pool 533 traversing and covering the gap 540 to a width greater than the width of gap 540. A laser beam is applied to initial weld pool 533 at a point 532 in weld pool 533 so as to create an enhanced weld pool 534 selected and positioned so as to add energy to weld pool 534 in a manner that causes, helps, or facilitates a flow of melted or vaporized material from the enhanced weld pool 534 into the gap 540. As a result, as the enhanced weld pool solidifies, a weld 562 is created that traverses and fills the gap 540 and bonding the pieces 510 and 520 to one another.

Therefore, the combined action of the arc welder and the laser welder, coupled with the positioning of the pieces so as to form a gap with a filler positioned advantageously therein, enables an enhanced weld pool to be formed that fills the gap to the depth of the filler. As the enhanced weld pool solidifies, a fully-fused and fully-penetrated weld can be created between two or more pieces using a relatively low power hybrid laser at relatively high speeds for the particular material composition and physical dimensions of the pieces. Thus, the invention provides a stable welding process with improved speed and reliability, enabling the use of relatively low-power, and/or relatively low-cost hybrid lasers to make welds on relatively thick-section pieces - even where those pieces comprise materials having a relatively high melting temperature.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A welding system (100) comprising:
two or more pieces (110) positioned to form a gap (140) between the pieces (110),
a filler (150) positioned in the gap (140) at a desired depth (144),
an arc welder (160) positioned and configured to follow the gap (140) and to transfer melted material to the vicinity of the gap (140) so as to create an initial weld pool (133) of a desired width,
a laser welder (130) positioned and configured to project a laser beam through the initial weld pool (133) adjacent to the gap (140) so as to melt at least a portion of the filler (150), thereby creating an enhanced weld pool (134) and helping the enhanced weld pool (134) to fill the gap (140).

2. A welding system (100) as in claim 1, wherein the filler (150) is a wire.

3. A welding system (100) as in claim 1 or 2, wherein the filler (150) has a substantially round cross-section.

4. A welding system (100) as in claim 1 or 2, wherein the filler (150) has a substantially rectangular cross-section.

5. A welding system (100) as in any of claims 1 to 4, wherein the filler (150) and the two or more pieces (110) comprise a single material.

6. A welding system (100) as in any of claims 1 to 5, wherein the filler (150) is positioned adjacent to a surface of the pieces.

7. A welding system (100) as in any of claims 1 to 6, wherein the filler (150) is fixed to at least one of the pieces (110).

8. A welding system (100) as in claim 7, wherein the filler (150) is tack-welded to at least one of the pieces (110).

9. A welding system (100) as in any preceding claim, wherein a power of the laser is predetermined based on a diameter of the filler (150).

10. A welding system (100) as in any of claims 1 to 8, wherein a power of the laser is predetermined based on a thickness of the filler (150).

11. A welding system (100) as in any preceding claim, wherein a cross-section of the gap (140) is one of Y-shaped, U-shaped or J-shaped.

12. A welding system as in any preceding claim, wherein the laser welder (130) is carried by one of a robotic arm, or a track assembly.

13. A welding system as in claim 12, wherein the robotic arm or track assembly is configured to carry the laser welder (130) at a welding speed of at least about fifty inches per minute.

14. A welding method comprising:
fixing two or more pieces (110) so as to define a gap (140) between the pieces (110),
positioning a filler (150) in the gap (140) at a desired depth (144),
applying an electrical arc to at least one of the two or more pieces (110) in the vicinity of the gap (140) so as to transfer melted material to the vicinity of the gap (140) and thereby create an initial weld pool (133) of a desired width, and
projecting a laser beam through the initial weld pool (133) adjacent to the gap (140) so as to melt at least a portion of the filler (150), thereby creating an enhanced weld pool (134) and helping the enhanced weld pool (134) to fill the gap (140).
